# EUROPEAN PATENT SPECIFICATION

(11) **EP 2 531 718 B1**
(45) Date of publication and mention of the grant of the patent: **30.03.2016**
(21) Application number: 11701388.8
(22) Date of filing: 20.01.2011
(51) Int. Cl.: F03B 13/10, F03B 13/26

(54) **A BIDIRECTIONAL WATER TURBINE**
BIDIREKTIONALE WASSERTURBINE
TURBINE HYDRAULIQUE BIDIRECTIONNELLE

(30) Priority: 05.02.2010 GB 201001871
(43) Date of publication of application: 12.12.2012
(73) Proprietor: Rolls-Royce plc, London SW1E 6AT (GB)
(72) Inventor: CHIR, Adam Philip, Derby Derbyshire DE72 3RN (GB); STEPHENS, Barry, Bristol South Gloucestershire BS35 3RS (GB); HEASMAN, Keith, Bristol BS8 4NF (GB); GOODHEAD, Bryn, Bristol BS8 2PS (GB)
(74) Representative: Rolls-Royce plc
(86) International application number: PCT/EP2011/050744
(87) International publication number: WO 2011/095398

(56) References cited:
- WO-A1-01/34973
- WO-A1-2008/009130
- CH-A- 316 900
- US-A1- 2008 315 591
- US-A1- 2009 058 093

## Description

This invention relates to a bidirectional water turbine, and particularly but not exclusively, to a bidirectional water turbine for use in a tidal barrage.

Tidal power harnesses the natural energy produced by the periodic rise and fall of the sea. These tides are created by the rotation of the Earth in the presence of the gravitational fields of the Sun and Moon.

Various methods may be employed to convert the energy of the tides into useful power. These methods broadly fall into two categories: tidal stream systems and tidal barrages.

Tidal stream systems operate in a similar manner to wind turbines and usually consist of a turbine which is rotated by the tidal current.

With a tidal barrage, water is allowed to flow into the area behind the barrage (for example, an estuary) through sluice gates during the flood tide. At high tide, the sluice gates are closed. Since the sea level falls during ebb tide, a head of water is created behind the barrage. Once the head of stored water is of sufficient height, the sluice gates are opened and the stored water is directed to flow through turbines housed within the barrage, thus converting the potential energy stored in the water into useful power.

A tidal barrage is in use on the Rance river in France. The Rance tidal barrage use 24 turbines, each capable of outputting 10 Megawatts of power. The turbines are low-head bulb turbines which capture energy from the 8 metre tidal range of the river using a 22.5 km² basin.

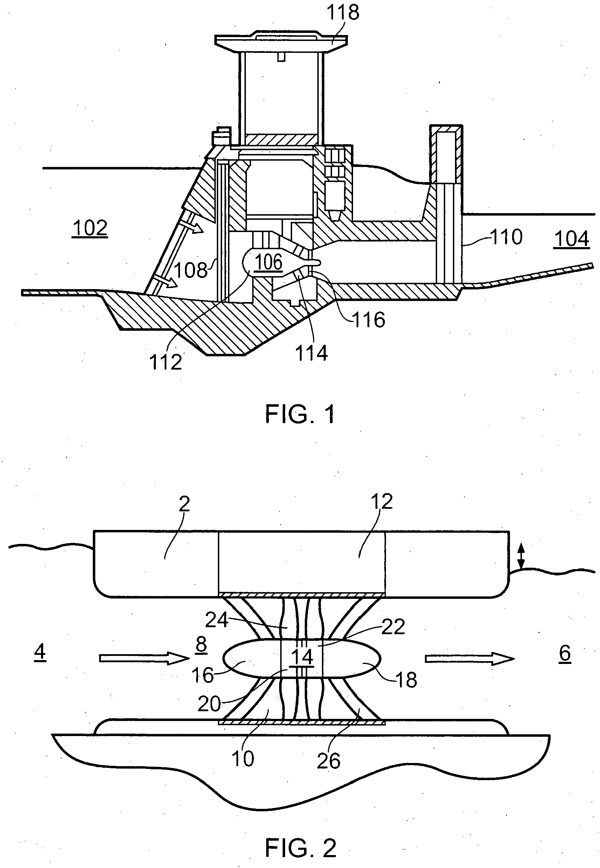

Figure 1 shows a cross-section through a tidal barrage as used on the Rance river.

The tidal barrage separates an upstream side 102 and a downstream side 104. A passage is formed through the barrage in which a bulb turbine 106 is positioned. The flow of water through the passage and turbine 106 is controlled by first and second sluice gates 108, 110 located at either end of the passage.

The turbine 106 comprises a generator 112 at an upstream end of the turbine 106. The generator 112 is positioned centrally in the turbine 106 and water is forced to flow around the outside of the generator 112 over a set of stationary guide vanes 114 to a rotor 116. The rotor 116 is rotatably coupled to the generator 112 and comprises a plurality of blades. The blades of the rotor 116 have a hydrofoil cross-section which creates torque and rotates the rotor 116 when water flows past the rotor 116. This turns the generator 112 and thus produces useful power.

In order to carry out maintenance on the turbine 106, it is necessary to close the first and second sluice gates 108, 110 and lift the turbine 106 out of the passage using an overhead crane 118. Therefore, it is not possible to generate any power whilst the maintenance is being carried out.

The turbines used in the Rance tidal barrage were intended for bidirectional operation (i.e. generating on both ebb and flood tides). However, the low efficiency of the turbines during flood tide has meant that the turbines have only been used for ebb generation.

Furthermore, the turbines have reduced the biodiversity of the river because of the high attrition rate of fish as they pass through the turbines.

US 20090058093 discloses integrated generator units mounted in an enclosure. Each unit has a plurality of rotational elements that rotate about an axis as fluid passes through the enclosure. An arrangement of magnets is provided such that the rotors generate electrical energy when rotated.

US 20080315591 discloses a generator for producing electric energy, and a drive shaft which is connected to the generator. The generator comprises a plurality of blades which extend at least partially into the passing water and are set rotating by the water. Said blades are offset in relation to each other and along the drive shaft.

Document CH-316900 shows a non-modular system.

The present invention provides an improved turbine which addresses some or all of the above identified problems associated with the prior art turbine.

In accordance with an aspect of the invention, there is provided a bidirectional water turbine comprising: an upstream rotor module and a downstream rotor module, each of the upstream and downstream rotor modules carrying a rotor comprising a plurality of blades; wherein the upstream and downstream rotor modules are individually removable from the turbine, the turbine being configured to operate with one of the upstream and downstream rotor modules removed and , wherein the upstream rotor module (52) and downstream rotor module (54) each further comprise a hub (16, 18) to which the blades (20, 22) are attached, the hubs (16, 18) each being supported by a plurality of hydrodynamically profiled struts (26) which are angled away from their respective rotor (20, 22), the struts (260) being located on an upstream side of the upstream rotor (54) and on a downstream side of the downstream rotor (56.

By making the upstream and downstream rotor modules individually removable from the turbine, the weight capacity of the crane required to lift them from the turbine is reduced. This enables a crane mounted on the barrage to be used rather than a crane mounted on a floating barge which would be required to remove the whole turbine.

The number of blades of the upstream rotor may be different from the number of blades of the downstream rotor. This prevents wake loadings from the upstream rotor from impinging on multiple blades of the downstream rotor simultaneously, which would produce significant axial loadings that are detrimental to rotor life. The numbers of blades may be such that there is no common multiple between the upstream and downstream rotors.

The upstream rotor may rotate in the opposite direction to the downstream rotor.

The use of contra-rotating upstream and downstream rotors is advantageous in that it substantially reduces the solidity of the rotor blades enabling both the upstream and downstream rotor cascades to be rotated through 180 degrees on the turn of tide such that the downstream rotor now performs the function of the upstream rotor and vice-versa. Furthermore, the contra-rotating upstream and downstream rotors reduce the degree of turning required across each blade, such that the efficiency of the blade at the root is higher and hub blockage may be reduced.

The cross-section of the upstream and downstream rotor modules may be substantially the same in a plane parallel to an axis of rotation of the rotors.

The upstream and downstream rotor modules may be installed in the turbine in a back-to-back orientation.

When installed in the turbine, the upstream and downstream rotor modules may be symmetrical about a plane aligned in a radial direction relative to a longitudinal axis of the turbine.

The upstream rotor module and downstream rotor module may each further comprise a hub to which the blades are attached, and the hubs may be profiled to prevent separation of exit flow.

The hubs may each be supported by a plurality of hydrodynamically profiled struts which are angled away from their respective rotor.

Angling the struts away from the tip of the rotor blade minimises the wake loading at the point where the blade is fastest and the moment to the supporting structure greatest.

The struts may be located on an upstream side of the upstream rotor and on a downstream side of the downstream rotor.

The struts may be located between the upstream and downstream rotors.

The struts may support the hubs from a cylindrical casing.

A maintenance passage may be provided through the struts.

The maintenance passage may contain a ladder.

The struts may be oriented in a non-radial direction.

The non-radial orientation of the struts prevents the struts from lying parallel to the entire length of one of the blades. This reduces wake loading on the blade.

The struts may be curved along their length.

The struts may comprise a locating feature for aligning the upstream and downstream rotors. The locating features may align or interlock when the rotors are correctly aligned.

In accordance with another aspect of the invention, there is provided a bidirectional water turbine comprising a rotor having a plurality of blades and a variable pitch mechanism for adjusting the pitch of the blades relative to the rotor.

The water turbine may comprise contra-rotating upstream and downstream rotor modules.

The variable pitch mechanism permits the rotors to run at a defined, fixed speed enabling the use of a conventional, low-risk drive train arrangement.

Furthermore, the variable pitch mechanism allows the turbine to operate an efficient pump to maximise power extraction from the barrage and minimise environmental impact.

The variable pitch mechanism may adjust the pitch of the blades such that exit swirl from the downstream rotor is minimized and/or the downstream and upstream rotors rotate at the same speed.

The variable pitch mechanism may allow the blades to rotate through at least 180 degrees. The variable pitch mechanism may allow the blades to rotate through at least 320 degrees and/or substantially 360 degrees.

The blades of the turbine may be rotated through substantially 180 degrees between first and second modes of operation to allow for, for example, a change in tide. The direction of rotation of each rotor may be reversed between the first and second modes of operation.

This allows the variable pitch mechanism to redistribute lubrication and prevent uneven wear of the component parts.

A plurality of the bidirectional water turbines may used in a tidal barrage.

For a better understanding of the present invention and to show more clearly how it may be carried into effect, reference will now be made, by way of example, to the accompanying drawings, in which:-
Figure 1 is a cross-section through a tidal barrage as used on the Rance river comprising a prior art turbine;
Figure 2 is a schematic cross-section through a tidal barrage comprising a bidirectional water turbine in accordance with a first embodiment of the invention;
Figure 3 is a detailed cross-section through the turbine of Figure 2; and
Figure 4 is a cross-section through the turbine of Figure 2 during removal of a rotor module.

Figure 2 shows a cross-section through a tidal barrage 2. The tidal barrage 2 is typically constructed from concrete and steel and spans across the width of an estuary or other suitable feature separating it from the sea.

The tidal barrage 2 defines an upstream side 4 and a downstream side 6. A series of ducts 8 are formed through the width of the tidal barrage 2 allowing water to pass through the tidal barrage 2.

A bidirectional water turbine 10 according to an embodiment of the invention is positioned in each of the ducts 8. The turbine 10 is lowered through an access passage 12 formed in the top of the tidal barrage 2. A cylindrical casing 14 of the turbine 10 completes the duct 8 through the tidal barrage 2 and creates a smooth passageway for water to flow.

A hub assembly 14 is disposed along a longitudinal axis of the turbine 10. The hub assembly 14 comprises a upstream hub 16 and a downstream hub 18. The upstream and downstream hubs 16, 18 are profiled to prevent separation of exit flow.

An upstream rotor 20 is rotatably coupled to the upstream hub 16 and a downstream rotor 22 is rotatably coupled to the downstream hub 18 for rotation about the longitudinal axis of the turbine 10. Each of the upstream and downstream rotors 20, 22 comprise a plurality of blades 24 which are spaced radially around the rotor. The blades 24 extend from the rotor towards the casing 14, with a small clearance separating the tip of the blade 24 from the casing 14. The blades 24 have a hydrofoil cross-section. The orientation of the hydrofoil cross-section of the blades 24 is reversed for the upstream rotor and downstream rotors 20, 22. The number of blades on the upstream rotor 20 is different from the number of blades on the downstream rotor 22. The

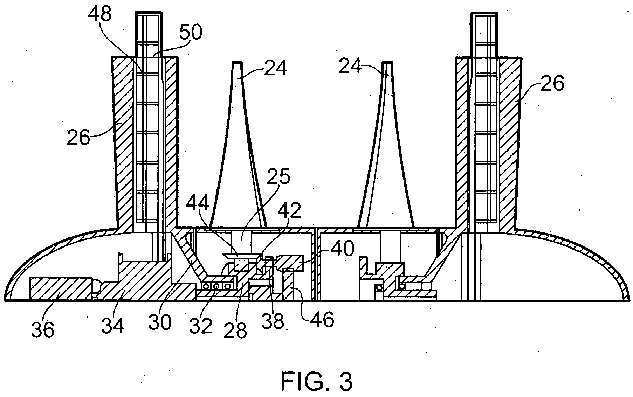

The upstream and downstream hubs 16, 18 are supported by a plurality of struts 26 which extend from the upstream and downstream hubs 16, 18 to positions located around the circumference of the casing 14. As shown in Figure 3, the struts 26 are integrally formed with the upsteam and downstream hubs 16, 18.

The struts 26 are hydrodynamically profiled to reduce their effect on the flow of water. Furthermore, the struts 20 are curved along their length in an axial direction and are angled away from their respective rotors 20, 22 so that the distance between the strut 26 and the rotor 20, 22 is greater at the end adjacent the casing 14 than at the end adjacent the hub 16, 18. The struts 26 are also curved or angled in a radial direction so that they are oriented in a non-radial direction. The non-radial orientation of the struts 26 prevents the struts 26 from lying parallel to the entire length of one of the blades 24.

Figure 3 shows a more detailed cross-section of the turbine 10. The blades 24 of the upstream and downstream rotors 20, 22 are attached at their root 25 to a driveshaft 28 (only shown for the upstream rotor 20). The driveshaft 28 rotates within a collar 30 fixed to the struts 26. To allow free rotation of the driveshaft 28 within the collar 30, a set of bearings 32 is provided between the surfaces of the driveshaft 28 and the collar 30.

The driveshaft 28 drives a transmission 34, such as an epicyclic gearbox. In turn, the transmission drives an electrical generator 36, such as a synchronous machine. The electrical generator 36 produces electrical power from the rotation of the driveshaft 28.

The roots 25 of the blades 24 of each of the upstream and downstream rotors 20, 22 are connected to a variable pitch mechanism 38. The variable pitch mechanism 38 comprises an electric motor 40 which drives a gear 42. The gear 42 meshes with a bevel gear 44 which is connected to the root 25 of the blade 24 and thus rotation of the electric motor 40 is converted into rotation of the blade 24. The electric motor 40 is connected to a supporting structure 46 to ensure that it rotates with the rotor.

As shown in Figure 3, the struts 26 are hollow providing a maintenance passage 48 for the turbine 10. The maintenance passage 48 houses a ladder 50 giving maintenance personal access to the inside of the turbine 10 to repair and/or inspect the internal components of the turbine 10, such as the electrical generator 36.

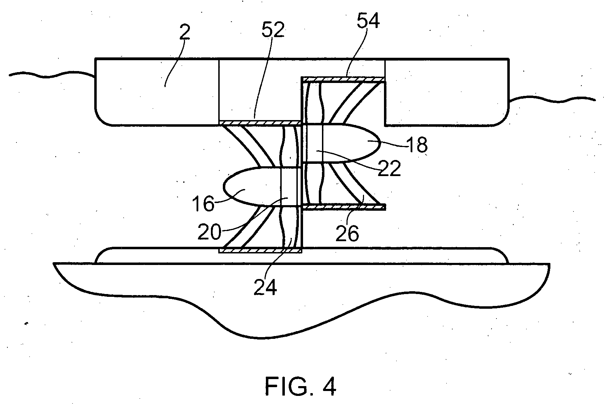

The upstream rotor 20, upstream hub 16, and the associated blades 24 and struts 26 form an upstream rotor module 52, as shown in Figure 4. Similarly, the downstream rotor 22, downstream hub 18, and the associated blades 24 and struts 26 form a downstream rotor module 54. The upstream and downstream rotor modules 52, 54 also comprise the associated drive elements, such as driveshaft 28, transmission 34 and electrical generator 36, as well as the variable pitch mechanism 38.

As shown in Figure 4, the upstream and downstream rotor modules 52, 54 are individually removable from the turbine 10. The turbine 10 is able to operate with one of the upstream and downstream rotor modules 52, 54 removed, albeit with a reduced efficiency. Therefore, maintenance can be carried out on one of the upstream and downstream modules 52, 54 whilst the other of the upstream and downstream modules 52, 54 provides power. To ensure correct alignment of the upstream and downstream rotor modules 52, 54, the struts 26 are provided with locating features (not shown) which align and/or interlock with one another when the modules are correctly aligned.

In use, the turbine 10 separates the water on the upstream side 4 of the turbine 10 from downstream side 6 side of the turbine 10. The water is prevented from passing through the turbine 10, for example, using a sluice (not shown). As the tide goes out a head of stored water is formed, indicated by arrow 56 in Figure 2. When the sluice is opened the stored water is allowed to flow through the turbine. The water acts on the blades 24 of the upstream rotor 20, which creates a torque on the upstream rotor as a result of the hydrofoil cross-section of the blades 24. Consequently, the upstream rotor 20 rotates. Similarly, the water acts on the blades 24 of the downstream rotor 22, which creates a torque on the downstream rotor 22. Since the hydrofoil cross-section of the blades 24 of the downstream rotor 22 is oriented in the opposite direction to that of the upstream rotor 20, the downstream rotor 22 rotates in the opposite direction to the upstream rotor 20.

The rotation of the upstream and downstream rotors 20, 22 drives the electrical generator 36, thus producing useful power.

The upstream rotor 20 introduces swirl into the incoming flow while the downstream rotor 22 removes this swirl. The variable pitch mechanism 38 is actuated electrically to adjust the pitching of both the upstream and downstream rotors 20, 22 such that the exit swirl from the downstream rotor 22 is ideally zero and both rotors 20, 22 run at constant speed.

To increase the head of water, the turbine 10 may be operated as a pump. By inputting power to the turbine 10, the generator 36 operates as a motor and the upstream and downstream rotors 20, 22 rotate pumping water from the downstream side 6 to the upstream side 4.

During flood tide, the upstream rotor 20 becomes the downstream rotor 22 and the downstream rotor 22 becomes the upstream rotor 20. However, the operation of the turbine is unchanged.

Minor maintenance may be carried out on the turbine 10 using the maintenance passage 48 and ladder 50 to access the inside of the turbine 10. If more major maintenance is required or replacement of a module, the upstream or downstream rotor module 52, 54 can be removed from the turbine 10 as previously described. The upstream or downstream rotor module 52, 54 can be removed from the turbine 10 using a crane mounted on the tidal barrage 2.

Although the present invention has been described with reference to a tidal barrage, the turbine 10 may alternatively be run in a free stream (i.e. no duct or barrage) environment.

The transmission 34 need not be an epicyclic gearbox but is preferably a mechanical, magnetic or hydraulic gearbox. Furthermore, the transmission 34 may be eliminated entirely and a permanent magnet direct-drive electrical generator used.

Alternative embodiments of the variable pitch mechanism 38 could be used. For example, the variable pitch mechanism 38 may be actuated by a single large gear ring meshing with the bevel gear 44 driven at multiple points by electrical drive. Alternatively, the variable pitch mechanism 38 may be actuated by an eccentric pin and linear drive mechanism. The variable pitch mechanism 38 is advantageously electrically, mechanically or hydraulically actuated.

Square-to-round transition pieces may be installed on the upstream and downstream sides 6, 8 of the turbine 10 to permit installation in a square duct and minimise expansion and contraction losses.

## Claims

1. A bidirectional water turbine (10) comprising:
an upstream rotor module (52) and a downstream rotor module (54), each of the upstream and downstream rotor modules (52, 54) carrying a rotor (20, 22) comprising a plurality of blades (24);
wherein the upstream and downstream rotor modules (52, 54) are individually removable from the turbine (10), the turbine (10) being configured to operate with one of the upstream and downstream rotor modules (52, 54) removed and **characterised by** the fact that the upstream rotor module (52) and downstream rotor module (54) each further comprise a hub (16, 18) to which the blades (20, 22) are attached, the hubs (16, 18) each being supported by a plurality of hydrodynamically profiled struts (26) which are angled away from their respective rotor (20, 22), the struts (260) being located on an upstream side of the upstream rotor (54) and on a downstream side of the downstream rotor (56).

2. A bidirectional water turbine as claimed in claim 1, wherein the upstream and downstream rotors (52, 54) are contra-rotating.

3. A bidirectional water turbine as claimed in claim 1 or 2, wherein the cross-section of the upstream and downstream rotor modules (52, 54) is substantially the same in a plane parallel to an axis of rotation of the rotors (20, 22), and the upstream and downstream rotor modules (52, 54) may be installed in the turbine (10) in a back-to-back orientation.

4. A bidirectional water turbine as claimed in any one of the preceding claims, wherein, when installed in the turbine, the upstream and downstream rotor modules (52, 54) are symmetrical about a plane aligned in a radial direction relative to a longitudinal axis of the turbine (10).

5. A bidirectional water turbine as claimed in any one of the preceding claims, wherein the hubs (16, 18) are profiled to prevent separation of exit flow.

6. A bidirectional water turbine as claimed in claim 5, wherein the struts (26) are located between the upstream and downstream rotors (52, 54).

7. A bidirectional water turbine as claimed in claims 5 or 6, wherein the struts are oriented in a non-radial direction.

8. A bidirectional water turbine as claimed in any one of claims 5 to 7, wherein the struts comprise a locating feature for aligning the upstream and downstream rotors.

9. A bidirectional water turbine as claimed in any of the preceding claims, wherein the variable pitch mechanism adjusts the pitch of the blades such that exit swirl from the downstream rotor is minimized and/or the downstream and upstream rotors rotate at the same speed.

10. A bidirectional water turbine as claimed in any of the preceding claims, wherein the variable pitch mechanism allows the blades to rotate through substantially 360 degrees.

11. A bidirectional water turbine as claimed in any of the preceding claims, wherein the upstream and downstream rotors are arranged for contra-rotation in use and each comprise a variable pitch mechanism.

12. A bidirectional water turbine according to any one of the preceding claims, wherein the pitch mechanism allows the blades to rotate through at least 180 degrees between first and second modes of operation.

13. A bidirectional water turbine according to claim 12, wherein the direction of rotation of each of the upstream and downstream rotor modules is reversed between the first and second modes of operation.

14. A tidal barrage comprising a plurality of bidirectional water turbines as claimed in any one of the preceding claims.

## Patentansprüche

1. Bidirektionale Wasserturbine (10), umfassend:
ein stromaufwärts liegendes Rotormodul (52) und ein stromabwärts liegendes Rotormodul (54), wobei jedes der stromaufwärts und stromabwärts liegenden Rotormodule (52, 54) einen Rotor (20, 22) trägt, der eine Mehrzahl von Schaufeln (24) umfasst;
wobei die stromaufwärts und stromabwärts liegenden Rotormodule (52, 54) einzeln von der Turbine (10) entfernt werden können, wobei die Turbine (10) so konfiguriert ist, dass sie funktionsfähig ist, wenn eines der stromaufwärts und stromabwärts liegenden Rotormodule (52, 54) entfernt ist, und **dadurch gekennzeichnet, dass** das stromaufwärts liegende Rotormodul (52) und das stromabwärts liegende Rotormodul (54) jeweils ferner eine Nabe (16, 18) umfassen, an welcher die Schaufeln (20, 22) angebracht sind, wobei die Naben (16, 18) jeweils von einer Mehrzahl hydrodynamisch profilierter Streben (26) getragen werden, die von ihrem entsprechenden Rotor (20, 22) in einem Winkel weggehen, wobei die Streben (260) auf einer stromaufwärts liegenden Seite des stromaufwärts liegenden Rotors (54) und auf einer stromabwärts liegenden Seite des stromabwärts liegenden Rotors (56) angeordnet sind.

2. Bidirektionale Wasserturbine nach Anspruch 1, wobei sich die stromaufwärts und stromabwärts liegenden Rotoren (52, 54) gegenläufig drehen.

3. Bidirektionale Wasserturbine nach Anspruch 1 oder 2, wobei der Querschnitt der stromaufwärts und stromabwärts liegenden Rotormodule (52, 54) im Wesentlichen gleich ist in einer Ebene, die parallel ist zu einer Rotationsachse der Rotoren (20, 22), und wobei die stromaufwärts und stromabwärts liegenden Rotormodule (52, 54) in Back-to-Back-Ausrichtung in der Turbine (10) installiert werden können.

4. Bidirektionale Wasserturbine nach einem der vorstehenden Ansprüche, wobei die stromaufwärts und stromabwärts liegenden Rotormodule (52, 54), wenn sie in der Turbine installiert sind, symmetrisch sind um eine Ebene, die in eine radiale Richtung im Verhältnis zu der Längsachse der Turbine (10) ausgerichtet ist.

5. Bidirektionale Wasserturbine nach einem der vorstehenden Ansprüche, wobei die Naben (16, 18) profiliert sind, um eine Trennung der Austrittsströmung zu verhindern.

6. Bidirektionale Wasserturbine nach Anspruch 5, wobei die Streben (26) zwischen den stromaufwärts und stromabwärts liegenden Rotoren (52, 54) angeordnet sind.

7. Bidirektionale Wasserturbine nach Anspruch 5 oder 6, wobei die Streben in eine nicht-radiale Richtung ausgerichtet sind.

8. Bidirektionale Wassersturbine nach einem der Ansprüche 5 bis 7, wobei die Streben ein Positionierungsmerkmal zur Ausrichtung der stromaufwärts und stromabwärts liegenden Rotoren umfassen.

9. Bidirektionale Wasserturbine nach einem der vorstehenden Ansprüche, wobei der Verstellmechanismus den Neigungswinkel der Schaufeln so anpasst, dass austretende Wirbel von dem stromabwärts liegenden Rotor minimiert werden und/oder so dass sich die stromaufwärts und stromabwärts liegenden Rotoren mit der gleichen Geschwindigkeit drehen.

10. Bidirektionale Wasserturbine nach einem der vorstehenden Ansprüche, wobei es der Verstellmechanismus ermöglicht, dass sich die Schaufeln um im Wesentlichen 360 Grad drehen.

11. Bidirektionale Wasserturbine nach einem der vorstehenden Ansprüche, wobei die stromaufwärts und stromabwärts liegenden Rotoren für eine gegenläufige Rotation im Einsatz angeordnet sind und jeweils einen Verstellmechanismus umfassen.

12. Bidirektionale Wasserturbine nach einem der vorstehenden Ansprüche, wobei der Verstellmechanismus es ermöglicht, dass sich die Schaufeln zwischen den ersten und zweiten Betriebsmodi wenigstens um 180 Grad drehen.

13. Bidirektionale Wasserturbine nach Anspruch 12, wobei die Rotationsrichtung jedes der stromaufwärts und stromabwärts liegenden Rotormodule zwischen den ersten und zweiten Betriebsmodi umgekehrt wird.

14. Tidenkraftsperre, umfassend eine Mehrzahl von bidirektionalen Wasserturbinen gemäß einem der vorstehenden Ansprüche.

## Revendications

1. Turbine hydraulique bidirectionnelle (10) comprenant :
un module (52) de rotor amont et un module (54) de rotor aval, chacun des modules (52, 54) de rotor amont et aval portant un rotor (20, 22) comprenant une pluralité de pales (24) ;
les modules (52, 54) de rotor amont et aval étant individuellement amovibles de la turbine (10), la turbine (10) étant conçue pour fonctionner avec l'un des modules (52, 54) de rotor amont et aval retiré et **caractérisé en ce que** le module (52) de rotor amont et le module (54) de rotor aval comprennent chacun un moyeu (16, 18) auquel les pales (20 22) sont fixées, les moyeux (16, 18) étant chacun soutenu par une pluralité d'entretoises profilées hydrodynamiquement (26) qui sont inclinées à l'opposé de leur rotor (20, 22) respectif, les entretoises (260) étant situées sur un côté amont du rotor amont (54) et un côté aval du rotor aval (56).

2. Turbine hydraulique bidirectionnelle selon la revendication 1, les rotors amont et aval (52, 54) étant contrarotatifs.

3. Turbine hydraulique de bidirectionnelle selon la revendication 1 ou 2, la section transversale des modules (52, 54) de rotor amont et aval étant sensiblement la même dans un plan parallèle à un axe de rotation des rotors (20, 22), et les modules (52, 54) de rotor amont et aval pouvant être installés dans la turbine (10) dans une orientation dos à dos.

4. Turbine hydraulique bidirectionnelle selon l'une quelconque des revendications précédentes, lorsqu'ils sont installés dans la turbine, les modules (52, 54) de rotor amont et aval étant symétriques par rapport à un plan aligné dans une direction radiale par rapport à un axe longitudinal de la turbine (10).

5. Turbine hydraulique bidirectionnelle selon l'une quelconque des revendications précédentes, les moyeux (16, 18) étant profilés pour empêcher la séparation du flux de sortie.

6. Turbine hydraulique bidirectionnelle selon la revendication 5, les entretoises (26) étant situées entre les rotors amont et aval (52, 54).

7. Turbine hydraulique bidirectionnelle selon la revendication 5 ou 6, les entretoises étant orientées dans une direction non radiale.

8. Turbine hydraulique bidirectionnelle selon l'une quelconque des revendications 5 à 7, les entretoises comprenant une fonction de localisation pour aligner les rotors amont et aval.

9. Turbine hydraulique bidirectionnelle selon l'une quelconque des revendications précédentes, le mécanisme à pas variable ajustant le pas des pales de sorte que le tourbillon de sortie provenant du rotor aval soit réduit au minimum et/ou les rotors amont et aval tournent à la même vitesse.

10. Turbine hydraulique bidirectionnelle selon l'une quelconque des revendications précédentes, le mécanisme à pas variable permettant aux pales de tourner sensiblement à 360 degrés.

11. Turbine hydraulique bidirectionnelle selon l'une quelconque des revendications précédentes, les rotors amont et aval étant disposés pour une contra-rotation en cours d'utilisation et chacun comprenant un mécanisme à pas variable.

12. Turbine hydraulique bidirectionnelle selon l'une quelconque des revendications précédentes, le mécanisme à pas permettant aux pales de tourner sur au moins 180 degrés entre les premier et second modes de fonctionnement.

13. Turbine hydraulique bidirectionnelle selon la revendication 12, le sens de rotation de chacun des modules de rotor amont et aval étant inversé entre les premier et second modes de fonctionnement.

14. Barrage marémoteur comprenant une pluralité de turbines hydrauliques bidirectionnelles selon l'une quelconque des revendications précédentes.
